# FASCICULE DE BREVET EUROPEEN

(11) **EP 3 071 802 B1**
(45) Date de publication et mention de la délivrance du brevet: **01.01.2020**
(21) Numéro de dépôt: 14821704.5
(22) Date de dépôt: 13.11.2014
(51) Int. Cl.: F01D 25/18, F02C 7/06, F02C 7/36, F01D 25/16, F02K 3/06, F02C 3/067, F02C 3/107

(54) **ENCEINTE AVANT ÉTANCHE LORS DU DÉSASSEMBLAGE MODULAIRE D'UN TURBORÉACTEUR A RÉDUCTEUR**
WÄHREND DER MODULAREN DEMONTAGE EINES STRAHLTRIEBWERKS MIT UNTERSETZUNGSGETRIEBE VERSIEGELTES VORDERGEHÄUSE
FRONT ENCLOSURE WHICH IS SEALED DURING THE MODULAR DISMANTLING OF A TURBOJET WITH REDUCTION GEAR

(30) Priorité: 21.11.2013 FR 1361468
(43) Date de publication de la demande: 28.09.2016
(73) Titulaire: Safran Aircraft Engines, 75015 Paris (FR)
(72) Inventeur: BRAULT, Michel Gilbert Roland, F-77550 Moissy-Cramayel Cedex (FR); NOWAKOWSKI, Nathalie, F-77550 Moissy-Cramayel Cedex (FR)
(74) Mandataire: Gevers & Orès
(86) Numéro de dépôt international: PCT/FR2014/052899
(87) Numéro de publication internationale: WO 2015/075355

(56) Documents cités:
- EP-A2- 2 535 528
- US-A1- 2006 059 887
- US-A1- 2009 081 039
- US-A1- 2012 195 753

## Description

Le domaine de la présente invention est celui des turbomachines aéronautiques et, plus particulièrement celui des turboréacteurs comportant un réducteur pour l'entraînement de la soufflante, ou respectivement de l'hélice.

Classiquement, les turbomachines comprennent tout d'abord, en partant de l'amont, un ou plusieurs modules de compresseur disposés en série, qui compriment de l'air aspiré dans une entrée d'air. L'air est ensuite introduit dans une chambre de combustion où il est mélangé à un carburant et brûlé. Les gaz de combustion passent à travers un ou plusieurs modules de turbine qui entraînent le ou les compresseurs. Les gaz sont enfin éjectés soit dans une tuyère pour produire une force de propulsion soit sur une turbine libre pour produire de la puissance qui est récupérée sur un arbre de transmission.

Les turboréacteurs double flux actuels à fort taux de dilution, ou turbofans, comportent plusieurs étages de compresseur, notamment un compresseur basse pression (BP) et un compresseur haute pression (HP) qui appartiennent au corps primaire du moteur. En amont du compresseur basse pression est disposée une roue d'aubes mobiles de grande dimension, ou soufflante, qui alimente à la fois le flux primaire traversant les compresseurs BP et HP et le flux froid, ou flux secondaire, qui est dirigé directement vers une tuyère de flux froid, dite tuyère secondaire. La soufflante est entraînée par l'arbre de rotation du corps BP et tourne généralement à la même vitesse que lui. Il peut cependant être intéressant de faire tourner la soufflante à une vitesse de rotation inférieure à celle de l'arbre BP, notamment lorsque celle-ci est de très grande dimension, dans le but de mieux l'adapter aérodynamiquement. Pour cela on dispose un réducteur entre l'arbre BP et un arbre fan, qui est porteur de la soufflante. Une telle configuration est notamment décrite dans les demandes de brevet FR 1251655 et 1251656 déposées le 23 février 2012, et dans US2012/195753.

Les turbomachines modernes sont classiquement réalisées sous la forme d'un assemblage de modules qui peuvent comporter des parties fixes et des parties mobiles. Un module est défini comme un sous-ensemble d'une turbomachine qui présente des caractéristiques géométriques au niveau de ses interfaces avec les modules adjacents suffisamment précises pour qu'il puisse être livré individuellement et qui a subi un équilibrage particulier lorsqu'il comporte des parties tournantes. L'assemblage des modules permet de constituer un moteur complet, en réduisant au maximum les opérations d'équilibrage et d'appariement des pièces en interface. La soufflante, l'arbre fan et le réducteur font, en général, partie d'un même module, dénommé module fan ou module de soufflante.

Les pièces tournantes, telles que le ou les arbres de rotation, le ou les compresseurs et la ou les turbines, sont portées par des pièces structurales, dites carter intermédiaire à l'avant et carter d'échappement à l'arrière, au moyen de paliers et de roulements qui sont enfermés dans des enceintes pour leur lubrification et leur refroidissement. Les turbomachines comprennent ainsi, généralement, au moins deux enceintes de lubrification, une située à l'avant qui renferme les paliers positionnés du côté des compresseurs ou de la soufflante, et une située à l'arrière qui renferme les paliers positionnés du côté des turbines. Ces enceintes sont constituées par un assemblage de parois mobiles et de parois fixes, entre lesquelles sont positionnés des dispositifs, du type joints labyrinthes, pour assurer la nécessaire étanchéité entre elles.

Dans les turbomachines à réducteur actuelles, le réducteur est généralement entraîné directement par l'arbre BP, au moyen de cannelures formées sur la partie extrême avant de l'arbre, qui coopèrent avec une roue dentée du réducteur positionnée au niveau de sa paroi cylindrique intérieure.

Cette solution présente un inconvénient majeur en ce qu'elle est incompatible de la modularité recherchée pour les moteurs modernes. Il est en effet nécessaire de pouvoir désassembler le moteur en un petit nombre de gros éléments, dénommés modules majeurs et qui sont formés d'un assemblage de plusieurs modules élémentaires. En l'occurrence il est souhaitable de pouvoir décomposer un moteur, que ce soit pour un pré-assemblage ou pour un désassemblage, en trois modules majeurs, un premier module majeur étant constitué, en amont, par les modules de compresseurs basse pression, un second module majeur par les parties haute pression et un troisième module majeur, en aval, par les modules de turbines basse pression.

Pour effectuer ce désassemblage il est nécessaire de désaccoupler le premier module majeur de l'arbre BP qui, soit reste attaché au module de turbine BP, soit est retiré du moteur. Le retrait de l'arbre BP rompt alors la continuité de l'enveloppe de l'enceinte étanche avant et en détruit l'étanchéité. Le démontage de l'arbre s'accompagne de ce fait d'une vidange de l'huile de cette enceinte, dont la quantité est relativement importante du fait de la lubrification à effectuer des pignons du réducteur. Des précautions doivent être prises par le personnel de maintenance pour éviter les salissures créée par cette huile, qui se répand de façon non maîtrisable et qu'il convient de récupérer en vue, entre autres, d'un remontage ultérieur.

Par ailleurs, lorsque l'enceinte est ouverte, des salissures externes, lors de la maintenance, peuvent venir contaminer l'huile de l'enceinte. Ce problème est encore plus sensible pour le bon fonctionnement d'un réducteur à paliers lisses, par rapport à des paliers à roulements, ce dernier nécessitant une huile de « bonne qualité ».

La présente invention a pour but de remédier à ces inconvénients en proposant un dispositif pour l'entraînement du réducteur d'une turbomachine, qui soit compatible d'un démontage de l'arbre BP, sans rupture de l'étanchéité de son enceinte avant. Il importe, de façon préférentielle, que l'écrou qui maintient l'arbre BP sur le premier module majeur soit accessible par un outillage depuis l'avant du moteur, sans que le passage de cet outillage n'interfère avec les parois de cette enceinte avant.

A cet effet, l'invention a pour objet un turboréacteur à double flux comportant une soufflante entraînée, via un arbre de soufflante porté par au moins deux premiers paliers, par un arbre de turbine porté par au moins un deuxième palier comportant une bague fixe et une bague mobile, ledit arbre entraînant ledit arbre de soufflante au travers d'un dispositif de réduction de la vitesse de rotation, ledit dispositif de réduction et lesdits premiers et deuxième paliers étant logés dans une enceinte de lubrification dont l'enveloppe comprend des parties fixes et des parties mobiles reliées les unes aux autres par des moyens d'étanchéité, ledit dispositif de réduction de vitesse comportant une roue d'entrée conformée pour recevoir le couple transmis par ledit arbre de turbine par l'intermédiaire de moyens d'entraînement rattachés à ladite bague mobile, caractérisé en ce que l'enceinte de lubrification forme un anneau coaxial avec l'arbre de turbin et lesdits moyens d'entraînement comprennent une couronne d'entraînement formant une partie des parois mobiles d'étanchéité de l'enveloppe de l'enceinte de lubrification.

Cela permet de constituer une enceinte pour laquelle les parois mobiles, en les plaçant en continuité avec les moyens d'entraînement, sont indépendantes de l'arbre de turbine BP. Les moyens d'entraînement du dispositif de réduction, et par suite toute la partie mobile de l'enceinte, peuvent alors être désaccouplés dudit arbre de turbine sans rupture de leur lien avec ladite bague mobile. Cette configuration permet de dissocier l'arbre BP de son palier sans que le dispositif de réduction ne soit concerné.

Le fait que les moyens d'entraînement du dispositif de réduction participent à la réalisation d'une partie de l'enceinte d'étanchéité permet d'éviter que de l'huile s'échappe de l'enceinte quand on désaccouple l'arbre de turbine BP de son palier, autrement dit lorsqu'on cherche à dissocier cet arbre du premier module majeur. Il est alors loisible d'organiser l'enceinte amont, tant pour sa partie fixe que pour sa partie mobile, de façon que le démontage de l'arbre BP n'entraîne pas de rupture de son étanchéité.

En outre lesdites parties mobiles de l'enceinte de lubrification comprennent l'arbre de soufflante, un carter d'extension aval dudit arbre de soufflante porteur des moyens d'étanchéité entre l'arbre de soufflante et lesdits moyens d'entraînement, et par lesdits moyens d'entraînement.

Les moyens d'entraînement comportent de façon avantageuse une partie d'extrémité positionnée radialement entre ladite bague mobile et ledit arbre de turbine, et une partie d'extrémité opposée portant des moyens d'étanchéité. Ces moyens d'étanchéité comprennent de préférence un joint labyrinthe.

Avantageusement, les moyens d'entraînement sont formés par deux arbres coaxiaux avec ledit arbre de turbine, un premier arbre d'entraînement étant lié à ladite bague mobile et comportant des moyens d'entraînement d'un second arbre d'entraînement formant ladite couronne d'entraînement de la roue d'entrée du dispositif de réduction. Cette décomposition en deux arbres de l'entraînement du dispositif de réduction rend le montage et le démontage du dispositif de réduction plus facile.

De façon préférentielle, ledit premier arbre d'entraînement comporte une partie conformée pour coopérer avec l'arbre de turbine et recevoir le couple à transmettre au dispositif de réduction, ladite partie étant positionnée entre ladite bague mobile et ledit arbre de turbine. L'arbre BP, étant positionné à l'intérieur des autres arbres, rend plus facile son isolement vis-à-vis de ceux-ci, ce qui facilite son désassemblage sans rupture de l'étanchéité de l'enceinte avant.

Dans un mode particulier de réalisation où le turboréacteur comporte en outre, axialement au niveau dudit deuxième palier, un tourillon porteur d'un rotor du turboréacteur, ladite partie du premier arbre d'entraînement est positionnée entre ladite bague mobile et ledit tourillon.
De façon préférentielle ladite enceinte de lubrification comprend deux moyens d'étanchéités de type rotor/stator au niveau d'un des premiers paliers et du deuxième palier et un moyen d'étanchéité de type rotor/rotor positionnée longitudinalement entre ledit arbre de turbine et ledit arbre de soufflante.
De façon plus préférentielle les moyens assurant l'étanchéité de type rotor/rotor sont portés, pour l'un, par un carter d'extension aval dudit arbre de soufflante et, pour l'autre, par un desdits moyens d'entraînement. De façon encore plus préférentielle l'étanchéité de type rotor/rotor comprend un joint labyrinthe.
Dans un mode préférentiel de réalisation de l'invention le diamètre intérieur de chacun des éléments des parties mobiles de ladite enceinte est supérieur à celui de l'arbre de turbine. Cette configuration permet le passage d'un outillage dans le creux de ces arbres et d'atteindre l'écrou qui fixe l'arbre BP sur son palier porteur de son roulement de butée.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue générale en coupe d'une turbomachine ;
- la figure 2 est une vue en coupe de la partie avant d'une turbomachine équipée d'un réducteur, montrant une enceinte avant selon l'art antérieur ;
- la figure 3 est une vue en coupe de la même partie avant, montrant une enceinte avant selon un mode de réalisation de l'invention ;
- la figure 4 est une vue de détail de l'enceinte de la figure 3, montrant les moyens d'entraînement du réducteur, et
- la figure 5 est une vue de détail des moyens d'entraînement de la figure 4.

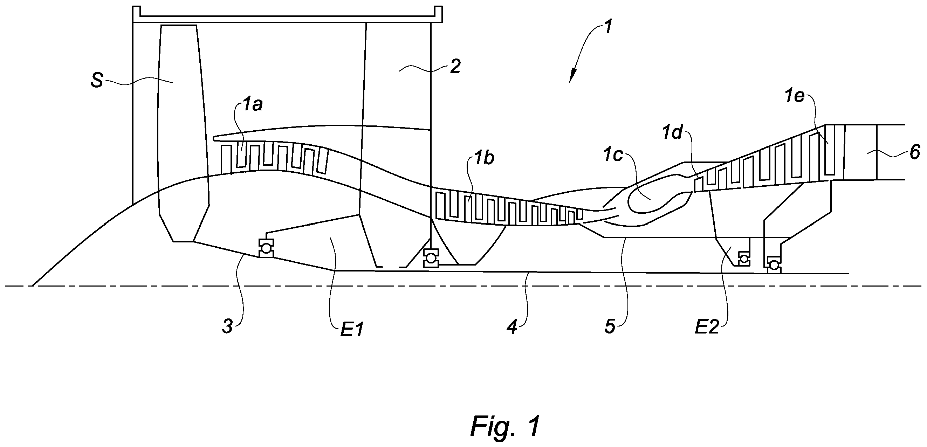

En se référant à la figure 1, on voit un turboréacteur 1 de l'art antérieur, sans réducteur, qui comporte, de manière classique, une soufflante S, un compresseur basse pression 1a, un compresseur haute pression 1b, une chambre de combustion 1c, une turbine haute pression 1d et une turbine basse pression 1e. Le compresseur haute pression 1b et la turbine haute pression 1d sont reliés par un arbre haute pression 5 et forment avec lui un corps haute pression (HP). Le compresseur basse pression 1a et la turbine basse pression 1e sont reliés par un arbre basse pression 4 et forment avec lui un corps basse pression (BP). La soufflante est, quant à elle, portée par un arbre de soufflante 3 qui, dans l'exemple représenté, est rigidement fixé sur l'arbre BP 4, sans dispositif de réduction de la vitesse de rotation entre les deux arbres.
Les arbres HP et BP s'étendent suivant un axe qui est l'axe de rotation du turboréacteur 1. Dans la suite de la description, les notions de longitudinal ou radial, et d'intérieur ou extérieur, sont relatives à cet axe.
La turbomachine 1 comprend également, classiquement, un carter intermédiaire 2 et un carter d'échappement 6 qui soutiennent, entre autres, les paliers des arbres de rotation BP et HP. Ceux-ci sont enfermés respectivement, dans une enceinte avant E1 rattachée au carter intermédiaire 2, pour les paliers situés en amont du corps HP, et dans une enceinte arrière E2 rattachée au carter d'échappement 6, pour les paliers situés en aval du corps HP. L'enceinte avant E1 est délimitée, pour sa partie fixe, par des carters, dits supports de paliers, s'étendant vers l'intérieur du moteur, de part et d'autre du roulement de butée de l'arbre BP et, pour sa partie mobile par l'extrémité amont de l'arbre BP lui-même.

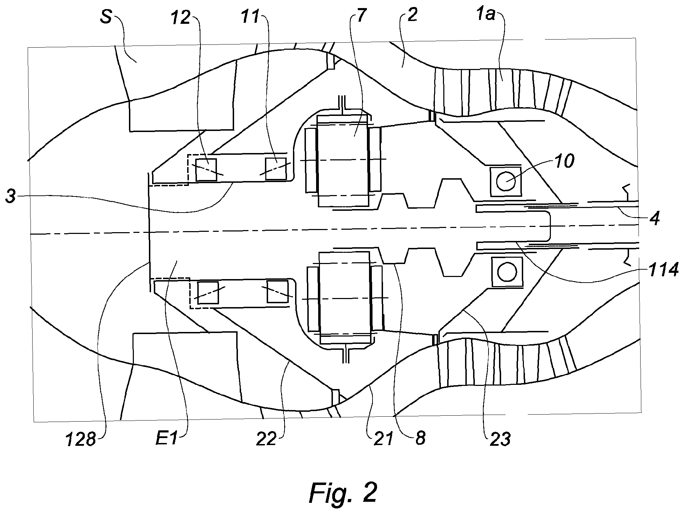

La figure 2 montre la partie avant d'un turbofan de l'art antérieur, dans lequel un réducteur 7 est positionné entre l'arbre de soufflante 3 et l'arbre BP 4. Ce réducteur, a priori de type épicycloïdal, est représenté sous la forme schématique d'un rectangle ne montrant que son encombrement. Il est entraîné par une couronne d'entraînement 8 s'étendant en amont de l'arbre BP 4 et qui est rattachée à la bague mobile du palier 10 porteur de cet arbre BP. Le couple en sortie de ce réducteur 7 est transmis à l'arbre de soufflante 3, par une liaison classique, connue de l'homme du métier, comme par exemple une fixation de cet arbre de soufflante sur le porte-satellites, dans le cas d'un réducteur épicycloïdal. Le réducteur est placé à l'intérieur d'une enceinte avant E1 de lubrification, représentée en grisé sur la figure.
Dans cette version de l'art antérieur, la partie fixe de l'enceinte E1 est formée de la paroi interne 21 de la veine du flux primaire, d'un support amont de palier 22 et d'une paroi enveloppant le support aval de palier 23. Ce support 22 et cette paroi 23 s'étendent vers l'intérieur de la turbomachine en allant envelopper, d'une part, le roulement du palier de butée 10 du corps BP 4, et, d'autre part, les roulements des paliers 11 et 12 de l'arbre de soufflante 3. La partie mobile est, quant à elle, formée par une paroi d'étanchéité 128 positionnée en extrémité amont de l'arbre de soufflante 3 et par les bagues mobiles, d'une part, du roulement de palier 12 de l'arbre de soufflante 3 qui est situé le plus en amont et, d'autre part, du palier de butée 10 de l'arbre BP 4 à l'aval. L'étanchéité de l'enceinte E1 est complétée à l'aval par l'écrou de turbine 114 qui fixe l'arbre de soufflante 3 et le module majeur de compression basse pression sur l'arbre BP 4. On comprend dès lors qu'avec cette configuration, un démontage de l'arbre BP et sa désolidarisation du premier module majeur, ne peut s'effectuer qu'en détruisant l'étanchéité de l'enceinte amont E1.

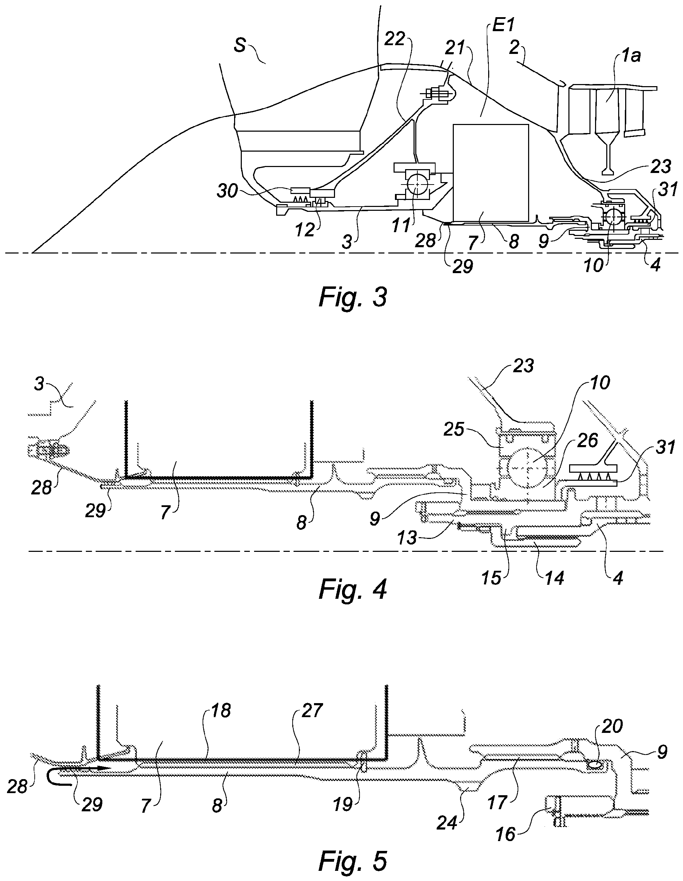

La figure 3 montre la partie avant d'un turbofan avec une enceinte avant E1 qui est améliorée selon l'invention. Sa partie fixe reste formée par les mêmes parois que dans la version précédente. Quant à sa partie mobile, elle est formée, d'amont en aval, par l'arbre de soufflante 3 sur lequel sont attachées les bagues mobiles des roulements de butée 11 et de rouleaux 12 de l'arbre de soufflante, par un carter 28 d'extension aval de l'arbre de soufflante 3, par la couronne 8 d'entraînement du réducteur 7 et par un arbre intermédiaire 9 d'extension de la couronne d'entraînement, qui vient se fixer sur la bague mobile 26 du roulement de butée 10 de l'arbre BP 4. L'enceinte avant E1 présente ainsi la forme d'une couronne creuse qui est centrée sur l'axe des arbres de rotation, et non plus une forme sensiblement convexe englobant cet axe. Le besoin d'une paroi d'étanchéité à l'amont de l'arbre de soufflante n'apparaît ainsi plus nécessaire. L'étanchéité de l'enceinte entre ses parties fixes et ses parties mobiles est alors assurée par 3 étanchéités : deux étanchéités de type rotor / stator aux extrémités amont et aval, au niveau du palier à rouleaux 12 de l'arbre de soufflante et du palier de butée 10 de l'arbre BP, et une étanchéité de type rotor / rotor entre le carter d'extension 28 et la couronne 8 d'entraînement du réducteur.

Les parties fixes et mobiles de l'enceinte avant se rejoignent classiquement au niveau de deux labyrinthes (ou d'autres étanchéités techniquement plus avancées), qui sont référencés 30 à l'amont et 31 à l'aval et qui sont positionnés à ses extrémités de façon à former un volume étanche qui renferme les trois roulements mentionnés ci-dessus et qui assure la permanence de leur lubrification et de leur refroidissement. En particulier l'étanchéité entre la couronne 8, qui tourne à la vitesse de l'arbre BP 4, et le carter aval d'extension 28, qui tourne à la vitesse de l'arbre de soufflante 3, est réalisée par un labyrinthe mobile d'étanchéité 29. Ce labyrinthe mobile 29 assure l'étanchéité à l'amont de la couronne 8. De façon typique, ce labyrinthe mobile 29 comprend des léchettes annulaires externes portées par la couronne 8 et entourées avec un faible jeu radial par le carter aval d'extension 28, comme cela est visible dans les dessins.
On remarque que cette enceinte E1 est entièrement portée par le module de soufflante, par le carter intermédiaire et par le module du compresseur BP, ce qui fait qu'elle peut être désolidarisée des autres modules ainsi que de l'arbre BP 4, sans que l'huile qui y est enfermée ne s'échappe. Par ailleurs les diamètres de la couronne d'entraînement 8 du réducteur et de l'arbre intermédiaire 9 de l'arbre BP sont définis pour être supérieurs à celui de l'arbre BP 4, ce qui signifie qu'il est possible d'y introduire un outillage cylindrique pour atteindre l'écrou de fixation de l'arbre BP 4 sur la bague mobile 26 de son roulement de butée 10 et permettre son dévissage sans que ces deux pièces n'interfèrent.

La figure 4 montre plus en détail la partie mobile de l'enceinte E1 qui est portée par le roulement de butée 10 et les deux bagues fixe 25 et mobile 26 de celui-ci. En partant de l'aval, l'arbre BP 4 engrène, par un système de cannelures, sur un tourillon 13, qui est relié à la bague mobile 26 du roulement de butée 10 par l'intermédiaire de l'arbre intermédiaire 9, et qui tourne pour entraîner le rotor du compresseur BP. L'arbre BP 4 est maintenu en place, axialement, sur ce tourillon par l'intermédiaire d'un écrou d'assemblage 14 qui se visse sur un filetage pratiqué sur la face interne de l'arbre BP 4 et qui vient prendre appui contre une butée axiale 15 s'évasant vers l'intérieur à partir du tourillon 13. Cet écrou, qui attache l'arbre BP 4 au tourillon 13, est accessible depuis l'avant du moteur, moyennant toutefois le démontage préalable du capot de sa pointe avant, sans qu'il soit besoin de démonter d'autres pièces et notamment des éléments constitutifs des parois de l'enceinte E1. Le but principal de l'invention, à savoir la possibilité de démonter l'arbre BP sans désassembler l'enceinte E1, est ainsi atteint.
Le tourillon 13 porte, vers l'amont, l'arbre intermédiaire 9 qui forme une extension de la couronne d'entraînement 8 du réducteur et qui est situé radialement entre le tourillon 13 et la bague mobile 26 du roulement de butée 10 de l'arbre BP à laquelle il est rigidement lié. Cet arbre intermédiaire a pour objet de prolonger la couronne 8 et de permettre le démontage de celle-ci d'avec le tourillon 13, sans que cette séparation de la couronne en deux éléments distincts, une couronne proprement dite 8 et un arbre intermédiaire 9, soit essentielle à la réalisation de l'invention. L'extrémité aval de l'arbre intermédiaire positionnée autour de l'arbre BP 4 constitue, avec la couronne d'entraînement 8, un élément de paroi de l'enceinte avant E1 qui est détachable de l'arbre BP 4 mais qui peut rester en place et maintenir l'intégrité volumique de l'enceinte avant E1 lorsque l'arbre BP est retiré. Enfin la couronne 8 d'entraînement du réducteur est montée sur l'arbre intermédiaire 9 au moyen de cannelures qui font coopérer les deux arbres et qui permettent l'entraînement de la couronne 8, et donc du réducteur 7, par l'arbre BP 4. Elle a comme indiqué précédemment, un diamètre supérieur à celui de l'arbre BP 4.

La figure 5 montre l'assemblage de la couronne 8 d'entraînement du réducteur 7 et l'arbre intermédiaire 9 qui lui transmet le couple fourni par l'arbre BP 4. L'ensemble des deux arbres est porté par la bague mobile 26 du palier de roulement de butée 10 au travers de laquelle passe l'extrémité aval de l'arbre intermédiaire 9. Celui-ci est maintenu en appui contre un ressaut du tourillon 13, situé en aval du roulement de butée, par l'action d'un écrou de verrouillage 16 qui se visse sur un filetage pratiqué sur la paroi extérieure du tourillon 13. L'arbre intermédiaire 9 s'étend axialement vers l'amont en présentant des cannelures qui coopèrent avec des premières cannelures 17 positionnées sur la couronne d'entraînement 8 à son extrémité aval. La couronne 8 porte par ailleurs, juste avant son extrémité amont, des secondes cannelures 18 orientées vers l'extérieur, qui coopèrent avec une roue dentée 27 du réducteur 7 que la couronne d'entraînement 8 entraîne et par lesquelles passe le couple d'entraînement de la soufflante fourni par l'arbre BP 4. Enfin, comme indiqué précédemment, l'extrémité amont de la couronne d'entraînement 8 porte des léchettes pour former avec le carter d'extension aval 28 un labyrinthe d'étanchéité mobile 29 et participer ainsi à la fermeture de l'enceinte amont E1. La couronne d'entraînement 8 et le carter d'extension aval sont co-rotatifs, mais tournent, comme indiqué plus haut, à des vitesses différentes, la couronne d'entraînement 8 avec ses léchettes tournant à la plus grande vitesse, ce qui contribue à fermer le jeu en fonctionnement. La ventilation interne à la couronne 8 vient, par ailleurs, pressuriser l'enceinte E1 et éviter les fuites d'huile, en passant du canal interne à l'arbre de soufflante vers l'intérieur de l'enceinte E1, comme cela est illustré par une flèche sur la figure 5.
Axialement, la couronne d'entraînement 8 est retenue en appui contre le réducteur 7 par un anneau axial de retenue 19, qui est porté par cette couronne et qui vient en appui contre une face radiale du réducteur, de sorte que les secondes cannelures 18 soient bien positionnées en face de la roue dentée 27 du réducteur 7. A son extrémité aval la couronne d'entraînement 8 est emmanchée dans l'arbre intermédiaire 9, qui présente une face radiale contre laquelle peut venir buter l'extrémité aval de la couronne 8. Un joint torique 20 assure l'étanchéité radiale entre les deux pièces et un jeu axial est laissé entre l'extrémité aval de la couronne d'entraînement 8 et la face radiale correspondante de l'arbre intermédiaire 9 de façon à permettre des dilatations différentielles éventuelles.
Enfin un crabot 24 formé par une série de dents s'étendant circonférentiellement est positionné à l'intérieur de la couronne d'entraînement 8 pour pouvoir immobiliser en rotation l'ensemble des pièces mobiles du module de soufflante et du module BP lorsque l'on souhaite démonter l'arbre BP 4. Un outillage spécialisé est introduit, depuis l'amont du moteur, dans le cylindre interne creux de l'arbre de soufflante 3, qui vient prendre appui sur le crabot 24 pour empêcher la rotation des rotors de soufflante et BP tandis qu'il engage, à son extrémité, l'écrou d'assemblage 14 pour le dévisser et libérer l'arbre BP 4.

Au final l'invention se caractérise par la présence d'un ou plusieurs arbres d'entraînement du réducteur 7 qui n'est alors plus porté par l'arbre BP 4 mais qui l'est, soit directement, soit pour des raisons de démontabilité via un arbre intermédiaire 9, par la bague mobile 26 du palier de butée de cet arbre BP. Il est alors possible, en ménageant les nécessaires étanchéités entre pièces fixes et pièces mobiles et entre pièces mobiles co-rotatives, d'organiser une enceinte avant E1 comprenant un réducteur, dont aucune paroi n'est plus directement rattachée à l'arbre BP 4. Le démontage de celui-ci peut alors s'effectuer sans que se fasse une vidange de l'huile située dans la cavité de l'enceinte avant E1.
Comme indiqué précédemment, pour des raisons d'accessibilité à l'écrou d'assemblage 14 de l'arbre BP, le ou les arbres d'entraînement du réducteur 7, qui forment ainsi la paroi interne de l'enceinte, ont un diamètre supérieur à celui dudit écrou, de façon à laisser le passage à un outillage spécialisé.

## Revendications

1. Turboréacteur à double flux comportant une soufflante (S) entraînée, via un arbre de soufflante (3) porté par au moins deux premiers paliers (11, 12), par un arbre de turbine (4) porté par au moins un deuxième palier (10) comportant une bague fixe (25) et une bague mobile (26), ledit arbre de turbine entraînant ledit arbre de soufflante (3) au travers d'un dispositif de réduction de la vitesse de rotation (7), ledit dispositif de réduction de la vitesse de rotation et lesdits premiers et deuxième paliers étant logés dans une enceinte de lubrification (E1) dont l'enveloppe comprend des parties fixes et des parties mobiles reliées les unes aux autres par des moyens d'étanchéité (29, 30, 31), ledit dispositif de réduction de vitesse comportant une roue d'entrée (27) conformée pour recevoir le couple transmis par ledit arbre de turbine par l'intermédiaire de moyens d'entraînement (8, 9) rattachés à ladite bague mobile,
l'enceinte de lubrification (E1) forme un anneau coaxial avec l'arbre de turbine, et lesdits moyens d'entraînement (8, 9) comprennent une couronne d'entrainement formant une partie des parois mobiles d'étanchéité de l'enveloppe de l'enceinte de lubrification (E1),
**caractérisé en ce que** lesdites parties mobiles de l'enveloppe de l'enceinte de lubrification (E1) comprennent l'arbre de soufflante (3), un carter d'extension aval (28) dudit arbre de soufflante porteur des moyens d'étanchéité (29) entre l'arbre de soufflante et lesdits moyens d'entraînement, et lesdits moyens d'entraînement (8, 9).

2. Turboréacteur selon la revendication 1 dans lequel lesdits moyens d'entraînement comportent une partie d'extrémité positionnée radialement entre ladite bague mobile et ledit arbre de turbine, et une partie d'extrémité opposée portant des moyens d'étanchéité (29).

3. Turboréacteur selon l'une des revendications 1 ou 2 dans lequel les moyens d'entraînement sont formés par deux arbres coaxiaux avec ledit arbre de turbine (4) : un premier arbre d'entraînement (9) étant lié à ladite bague mobile (26) et comportant des moyens d'entraînement d'un second arbre d'entrainement (8) formant ladite couronne d'entraînement de la roue d'entrée du dispositif de réduction (7).

4. Turboréacteur selon la revendication 3 dans lequel ledit premier arbre d'entraînement comporte une partie conformée pour coopérer avec l'arbre de turbine (4) et recevoir le couple à transmettre au dispositif de réduction (7), ladite partie étant positionnée entre ladite bague mobile et ledit arbre de turbine.

5. Turboréacteur selon la revendication 4 comportant en outre, axialement au niveau dudit deuxième palier (10), un tourillon (13) porteur d'un rotor du turboréacteur, dans lequel ladite partie du premier arbre d'entraînement (9) est positionnée entre ladite bague mobile et ledit tourillon.

6. Turboréacteur selon l'une des revendications 1 à 5, dans lequel ladite enceinte de lubrification comprend deux moyens d'étanchéités de type rotor/stator au niveau d'un des premiers paliers et du deuxième palier (10, 12) et un moyen d'étanchéité de type rotor/rotor (29) positionné longitudinalement entre ledit arbre de turbine et ledit arbre de soufflante.

7. Turboréacteur selon la revendication 6, dans lequel les moyens (29) assurant l'étanchéité de type rotor/rotor sont portés, pour l'un, par un carter d'extension aval (28) dudit arbre de soufflante et, pour l'autre, par un desdits moyens d'entraînement (8).

8. Turboréacteur selon l'une des revendications 6 ou 7, dans lequel l'étanchéité de type rotor/rotor comprend un joint labyrinthe mobile (29).

9. Turboréacteur selon l'une des revendications 1 à 8 dans lequel le diamètre intérieur de chacun des éléments des parties mobiles (3, 28, 8, 9, 13) de ladite enceinte est supérieur à celui de l'arbre de turbine (4).

## Patentansprüche

1. Zweistrom-Turbostrahltriebwerk, das ein Gebläse (S) beinhaltet, das über eine Gebläsewelle (3) angetrieben ist, die von mindestens zwei ersten Lagern (11, 12) getragen wird, durch eine Turbinenwelle (4), die von mindestens einem zweiten Lager (10) getragen wird, das einen stationären Ring (25) und einen beweglichen Ring (26) beinhaltet, wobei die Turbinenwelle die Gebläsewelle (3) über eine Drehzahlreduktionsvorrichtung (7) antreibt, wobei die Drehzahlreduktionsvorrichtung und das erste und das zweite Lager in einem Schmiereinschluss (E1) aufgenommen sind, dessen Mantel stationäre Teile und bewegliche Teile umfasst, die miteinander durch Dichtungsmittel (29, 30, 31) verbunden sind, wobei die Drehzahlreduktionsvorrichtung ein Eingangsrad (27) beinhaltet, das ausgestaltet ist, um das Drehmoment, das von der Turbinenwelle übertragen wird, über Antriebsmittel (8, 9), die an den beweglichen Ring angegliedert sind, zu empfangen,
der Schmiereinschluss (E1) einen Ring bildet, der mit der Turbinenwelle koaxial ist, und wobei die Antriebsmittel (8, 9) einen Antriebskranz umfassen, der einen Teil der beweglichen Dichtungswände des Mantels des Schmiereinschlusses (E1) bildet,
**dadurch gekennzeichnet, dass** die beweglichen Teile des Mantels des Schmiereinschlusses (E1) die Gebläsewelle (3), ein Erweiterungsgehäuse stromabwärts (28) der Gebläsewelle, Träger der Dichtungsmittel (29) zwischen der Gebläsewelle und den Antriebsmitteln, und die Antriebsmittel (8, 9) umfassen.

2. Turbostrahltriebwerk nach Anspruch 1, wobei die Antriebsmittel einen Endteil beinhalten, der radial zwischen dem beweglichen Ring und der Turbinenwelle positioniert ist, und einen entgegengesetzten Endteil, der Dichtungsmittel (29) trägt.

3. Turbostrahltriebwerk nach einem der Ansprüche 1 oder 2, wobei die Antriebsmittel aus zwei Wellen gebildet sind, die mit der Turbinenwelle (4) koaxial sind: eine erste Antriebswelle (9), die mit dem beweglichen Ring (26) verbunden ist, und Antriebsmittel einer zweiten Antriebswelle (8), die den Antriebskranz des Eingangsrads der Reduktionsvorrichtung (7) bildet, beinhaltet.

4. Turbostrahltriebwerk nach Anspruch 3, wobei die erste Antriebswelle einen Teil beinhaltet, der ausgestaltet ist, um mit der Turbinenwelle (4) zusammenzuwirken und das Moment, das auf die Reduktionsvorrichtung (7) zu übertragen ist, zu empfangen, wobei der Teil zwischen dem beweglichen Ring und der Turbinenwelle positioniert ist.

5. Turbostrahltriebwerk nach Anspruch 4, das weiter axial in dem Bereich des zweiten Lagers (10) einen Lagerzapfen (13), Träger eines Rotors des Turbostrahltriebwerks, beinhaltet, wobei der Teil der ersten Antriebswelle (9) zwischen dem beweglichen Ring und dem Lagerzapfen positioniert ist.

6. Turbostrahltriebwerk nach einem der Ansprüche 1 bis 5, wobei der Schmiereinschluss zwei Dichtungsmittel vom Typ Rotor/Stator in dem Bereich eines des ersten Lagers und des zweiten Lagers (10, 12), und ein Dichtungsmittel vom Typ Rotor/Rotor (29) umfasst, das längs zwischen der Turbinenwelle und der Gebläsewelle positioniert ist.

7. Turbostrahltriebwerk nach Anspruch 6, wobei die Mittel (29), die für die Dichtung vom Typ Rotor/Rotor sorgen, einerseits von einem stromabwärtigen Erweiterungsgehäuse (28) der Gebläsewelle und andererseits von einem der Antriebsmittel (8) getragen werden.

8. Turbostrahltriebwerk nach einem der Ansprüche 6 oder 7, wobei die Dichtung vom Typ Rotor/Rotor eine bewegliche Labyrinthdichtung (29) umfasst.

9. Turbostrahltriebwerk nach einem der Ansprüche 1 bis 8, wobei der Innendurchmesser jedes der Elemente der beweglichen Teile (3, 28, 8, 9, 13) des Einschlusses größer ist als jener der Turbinenwelle (4).

## Claims

1. Bypass turbojet engine comprising a fan (S) which is driven, by means of a fan shaft (3) which is supported by at least two first bearings (11, 12), by a turbine shaft (4) which is supported by at least one second bearing (10) having a fixed ring (25) and a movable ring (26), said turbine shaft driving said fan shaft (3) through a device for reducing the rotational speed (7), said device for reducing the rotational speed and said first and second bearings being received in a lubrication vessel (E1), the casing of which comprises fixed portions and movable portions which are interconnected by sealing means (29, 30, 31), said device for reducing speed having an input wheel (27) which is shaped so as to receive the torque transmitted by said turbine shaft by drive means (8, 9) which are connected to said movable ring, the lubrication vessel (E1) forms a ring which is coaxial with the turbine shaft, and said drive means (8, 9) have a drive ring forming a portion of the movable sealing walls of the casing of the lubrication vessel (E1),, **characterised in that** said movable portions of the casing of the lubrication vessel (E1) comprise the fan shaft (3), a downstream extension casing (28) of said fan shaft supporting the sealing means (29) between the fan shaft and said drive means, and said drive means (8, 9).

2. Turbojet engine according to claim 1, wherein said drive means comprise an end portion which is positioned radially between said movable ring and said turbine shaft, and an opposite end portion supporting the sealing means (29).

3. Turbojet engine according to either claim 1 or claim 2, wherein the drive means are formed by two shafts which are coaxial with said turbine shaft (4): a first drive shaft (9) being connected to said movable ring (26) and comprising drive means of a second drive shaft (8) forming said drive ring of the input wheel of the reduction device (7).

4. Turbojet engine according to claim 3, wherein said first drive shaft comprises a portion which is shaped so as to cooperate with the turbine shaft (4) and receive the torque to be transmitted to the reduction device (7), said portion being positioned between said movable ring and said turbine shaft.

5. Turbojet engine according to claim 4, further comprising, axially in the region of said second bearing (10), a journal (13) supporting a rotor of the turbojet engine, wherein said portion of the first drive shaft (9) is positioned between said movable ring and said journal.

6. Turbojet engine according to any of claims 1 to 5, wherein said lubrication vessel comprises two sealing means of the rotor/stator type in the region of one of the first bearings and the second bearing (10, 12) and a sealing means of the rotor/rotor type (29) which is positioned lengthwise between said turbine shaft and said fan shaft.

7. Turbojet engine according to claim 6, wherein the means (29) which ensure the rotor/rotor-type seal are supported, firstly, by a downstream extension casing (28) of said fan shaft and, secondly, by one of said drive means (8).

8. Turbojet engine according to either claim 6 or claim 7, wherein the rotor/rotor-type seal comprises a movable labyrinth seal (29).

9. Turbojet engine according to any of claims 1 to 8, wherein the internal diameter of each of the elements of the movable portions (3, 28, 8, 9, 13) of said vessel is greater than that of the turbine shaft (4).
